Europäisches Patentamt

European Patent Office

Office européen des brevets

(19)

(11) Numéro de publication : **0 307 986 B1**

(12) **FASCICULE DE BREVET EUROPEEN**

(45) Date de publication du fascicule du brevet :
02.05.91 Bulletin 91/18

(51) Int. Cl.⁵ : **E02B 3/12,** A01G 13/10,
D03D 15/02, E02D 17/20

(21) Numéro de dépôt : **88201829.4**

(22) Date de dépôt : **26.08.88**

(54) **Produit géotextile pour application dans des travaux de terrassement et résistant aux animaux rongeurs.**

(30) Priorité : 15.09.87 BE 8701037

(43) Date de publication de la demande :
22.03.89 Bulletin 89/12

(45) Mention de la délivrance du brevet :
02.05.91 Bulletin 91/18

(84) Etats contractants désignés :
BE DE FR GB LU

(56) Documents cités :
EP-A- 0 021 467
FR-A- 842 050
FR-A- 1 559 879
FR-A- 2 385 327

(73) Titulaire : **SA UCO NV**
**Bellevue 1**
**B-9218 Gent (Ledeberg) (BE)**

(72) Inventeur : **De Meerleer, Frans**
**Groenveldlaan24**
**B-1860 Meise (BE)**
Inventeur : **Dirks, Ludo**
**Wapenhaghestraat 12**
**B-2600 Berchem (BE)**
Inventeur : **Donckers, Frans**
**Boelenaar 39**
**B-9810 Gent (Drongen) (BE)**

(74) Mandataire : **Pieraerts, Jacques et al**
**Bureau Gevers S.A. rue de Livourne 7 bte 1**
**B-1050 Bruxelles (BE)**

## Description

L'invention concerne un produit géotextile pour application dans des travaux de terrassement, des travaux routiers, des travaux d'hydraulique ou d'agriculture et pourvu d'un armement afin d'être résistant aux animaux rongeurs, tels entre autres des rats musqués, des rats d'eau et/ou des lapins (comme le EP-A-0021467). Des produits tissés en matière textile renforcée par des fils métalliques incorporés dans la trame et la chaîne du tissu, pour former des rectangles ou des carrés, sont déjà connus dans l'industrie aéronautique (FR-A-842050).

Par ailleurs il est connu que des animaux rongeurs, en particulier mais non exclusivement des rats musqués et des rats d'eau, creusent entre autres des canaux dans les digues des cours d'eau, lesquels canaux peuvent alors constituer un danger de rupture de la digue ainsi qu'un danger que la digue soit emportée par les eaux. Egalement dans d'autres travaux de terrassement il est utile de combattre les nuisances causées par les animaux rongeurs.

Ainsi d'une part on utilise déjà pour la construction des digues du fil de fer tressé, notamment du tressage hexagonal (toile métallique) ayant des mailles relativement petites et servant à armer les talus contre les animaux rongeurs. Ce matériel empêche bien le passage des animaux et ainsi la formation de couloirs à travers lesquels l'eau s'évacue, mais ne retient pas la terre du côté eau. L'incorporation dans la digue ou l'application contre la digue de ce matériel n'épargne pas la digue de l'érosion.

D'autre part les géotextiles en matière synthétique ne sont eux-mêmes pas résistants au perçage en rongeant.

L'invention a pour but de réaliser un géotextile nouveau et original qui satisfait aux exigences suivantes :

1) d'empêcher le perçage en rongeant par des animaux rongeurs ;
2) de satisfaire aux exigences connues qui sont imposées aux géotextiles : par exemple obtenir une résistance à la traction, une étanchéité et une perméabilité du sol.

Afin de réaliser ceci d'une façon efficace selon l'invention, le produit géotextile est formé d'un tressage de fils synthétiques où au moins suivant une direction (fils de foule ou fil de trame) des petits fils en acier sont introduits dans le tissage.

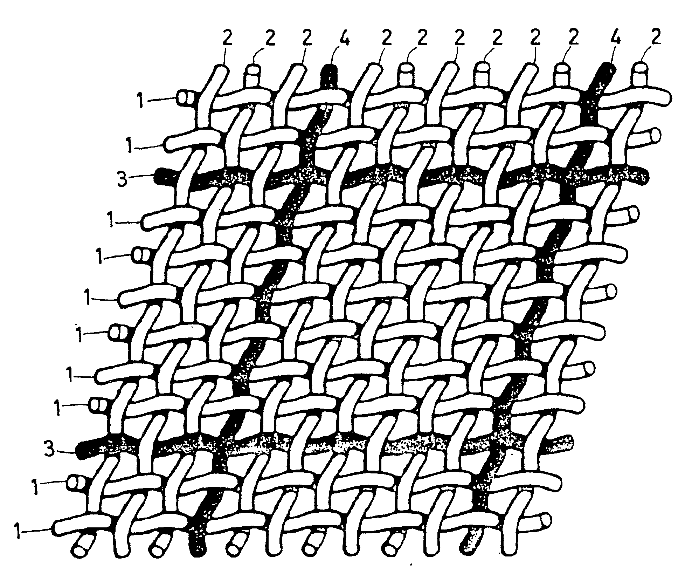

D'autres détails et avantages de l'invention seront décrits dans la description, donnée ci-dessous, d'un produit géotextile selon l'invention. Cette description est donnée uniquement à titre d'exemple et ne limite pas l'invention. Les références se rapportent au dessin.

La figure ci-jointe montre une forme préférentielle d'un produit géotextile selon l'invention.

Le produit géotextile représenté dans cette figure, est constituée d'un tressage où des fils synthétiques 1 et 2 peuvent être considérés comme des fils de trame et des fils de foule. La méthode de tissage ou la façon dont sont reliés entre eux les fils qui sont en équerre l'un par rapport à l'autre, n'a pas vraiment d'importance.

Les mailles formées par les fils 1 et 2, sont choisies en fonction des critères de réalisation qui sont utilisés pour un géotextile non armé. Ceci veut dire sur base de la force de traction, de l'étanchéité du sol, de la perméabilité à l'eau et d'une combinaison de ces trois caractéristiques.

Les fils synthétiques peuvent être formés de matières généralement connues, tel qu'il sera décrit plus loin.

Puisque ces matériaux synthétiques peuvent être percés par des animaux rongeurs, conformément à l'invention des fils 3 et 4 en métal sont tissés ensemble avec les fils synthétiques qui se croisent de façon orthogonale. Les fils de foule et les fils de trame forment un rectangle de par exemple dont les dimensions sont comprises entre 10 mm sur 10 mm et 15 mm sur 15 mm.

La dimension des mailles de ces fils synthétiques dépend d'une certaine façon de l'épaisseur de ces fils mêmes et du nombre de fils par unité de longueur.

Par exemple, en utilisant des fils synthétiques ayant une épaisseur d'à peu près 400 microns et en utilisant 8 fils par cm la dimension des mailles est d'à peu près 1 mm.

Les fils synthétiques peuvent être composés de différents matériaux qui sont aptes à ce but tels par exemple en polyéthylène, en polyester, en polypropylène ou en polyamide. Ainsi les fils de trame peuvent être dans l'une matière alors que les fils de foule peuvent être constitués d'une autre matière.

La force du produit géotextile et la capacité de ce dernier de s'adapter aux inégalités du sol, font que le produit géotextile selon l'invention est particulièrement apte à être utilisé en tant que embuscade infranchissable pour des animaux rongeurs.

Il est clair que l'invention n'est pas limitée à la forme préférentielle décrite ci-dessus et qu'à cette dernière de multiples modifications peuvent être apportées sans quitter le champ d'application de la demande de brevet comme défini par les termes des revendications.

## Revendications

1. Produit géotextile pour application dans des travaux de terrassement, des travaux routiers, des travaux d'hydraulique ou d'agriculture et pourvu d'un armement afin d'être résistant aux animaux rongeurs, tels entre autres des rats musqués, des rats d'eau et/ou des lapins, caractérisé en ce que le produit est formé d'un tressage de fils synthétiques (1, 2) (fils de foule et de trame), des petits fils en acier (3, 4) étant introduits dans le tissage aussi bien en tant que fils de foule qu'en tant que fils de trame et se croisent orthogonalement et forment un rectangle dont les dimensions sont comprises entre 10 mm sur 10 mm et 15 mm sur 15 mm.

## Ansprüche

1. Geotextiles Produkt zur Anwendung bei Arbeiten im Erdbau, Strassenbau, Wasserbau oder in der Landwirtschaft, das mit einer gegen Nagetiere wie unter anderen, Bisamratten, Wasserratten und/oder Kaninchen widerstandsfähigen Armierung ausgestattet ist, dadurch gekennzeichnet, daß das Produkt aus einem Geflecht aus synthetischen Fäden (1, 2) (Ketten- und Schußfäden) gebildet ist, wobei in das Gewebe dünne Stahldrähte (3, 4) sowohl als Kettenwie als Schußfäden eingearbeitet sind, sich rechtwinklig überkreuzen und ein Rechteck bilden, dessen Abmessungen zwischen 10 mm auf 10 mm und 15 mm auf 15 mm liegen.

## Claims

1. A geotextile product for use in earthworks, roadworks, hydroworks and agricultural works and having a reinforcement resistant to rodents including musk rats, water rats and/or rabbits, characterised in that the product is in the form of a braiding of synthetic filaments (12) (warp yarns and weft yarns), small steel wires (3, 4) being introduced into the weave as both warp yarns and weft yarns, crossing one another at right-angles and forming a rectangle having dimensions of from 10 mm by 10 mm to 15 mm by 15 mm.